(19) Europäisches Patentamt
European Patent Office
Office européen des brevets

(11) **EP 4 163 835 A1**

(12) **EUROPEAN PATENT APPLICATION**

(43) Date of publication:
**12.04.2023 Bulletin 2023/15**

(21) Application number: **22197721.8**

(22) Date of filing: **26.09.2022**

(51) International Patent Classification (IPC):
**G06N 3/0464** (2023.01)     **G06N 3/045** (2023.01)
**G06N 3/09** (2023.01)     **G06N 3/096** (2023.01)
**G06N 3/0985** (2023.01)     **G06N 3/082** (2023.01)

(52) Cooperative Patent Classification (CPC):
**G06N 3/0464; G06N 3/045; G06N 3/082;**
**G06N 3/09; G06N 3/096; G06N 3/0985**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **05.10.2021   US 202163252541 P**
**06.05.2022   US 202217738931**

(71) Applicant: **Samsung Electronics Co., Ltd.**
**Gyeonggi-do 16677 (KR)**

(72) Inventors:
• YANG, Li
  San Jose, CA 95134 (US)
• FANG, Jun
  San Jose, CA 95134 (US)
• THORSLEY, David Philip Lloyd
  San Jose, CA 95134 (US)
• HASSOUN, Joseph H.
  San Jose, CA 95134 (US)
• ABDELAZIZ, Hamzah Ahmed Ali
  San Jose, CA 95134 (US)

(74) Representative: **Kuhnen & Wacker**
**Patent- und Rechtsanwaltsbüro PartG mbB**
**Prinz-Ludwig-Straße 40A**
**85354 Freising (DE)**

(54) **SYSTEM AND METHOD FOR TRAINING A NEURAL NETWORK UNDER PERFORMANCE AND HARDWARE CONSTRAINTS**

(57)     A system and method for training a neural network. In some embodiments the method includes training a full-sized network and a plurality of sub-networks, the training including performing a plurality of iterations of supervised co-training, the performing of each iteration including co-training the full-sized network and a subset of the plurality of sub-networks.

FIG. 3

EP 4 163 835 A1

**Description**

**TECHNICAL AREA**

One or more aspects of embodiments according to the present disclosure relate to neural networks (e.g., artificial neural networks), and more particularly to a system and method for training a neural network.

**BACKGROUND**

Neural architecture search (NAS) aims to automatically find the optimal neural network architecture given hardware constraints, such as floating point operations (FLOPs) or latency. Some systems and methods for neural architecture search employ reinforcement learning, evolutionary search, or sparse connection learning to sample different architectures. However, each sampled architecture may need to be trained from scratch, resulting in a large computing cost. Some methods reduce the cost by training an over-parameterized network, which may be referred to as a super-network, and then sampling various sub-networks which share the weights with the super-network.

It is with respect to this general technical environment that aspects of the present disclosure are related.

**TECHNICAL PROBLEM**

A purpose of the present invention is to provide a system and method for training a neural network co-training with the plurality of sub-networks using weights of a full-sized network.

**SUMMARY**

According to an embodiment of the present disclosure, there is provided a method, including: training a full-sized network and a plurality of sub-networks, the training including performing a plurality of iterations of supervised co-training, the performing of each iteration including co-training the full-sized network and a subset of the sub-networks.

In some embodiments, the co-training of the full-sized network and the subset of the sub-networks includes maximizing the full-sized network only with respect to ground truth labels.

In some embodiments, the co-training of the full-sized network and the subset of the sub-networks includes maximizing the sub-networks only with respect to output of the full-sized network.

In some embodiments, each subset of the sub-networks excludes the smallest sub-network.

In some embodiments, for each iteration, each subset of the sub-networks is selected at random.

In some embodiments, the method further includes performing an epoch of training of the full network, without performing co-training with the sub-networks, before the performing of the plurality of iterations of supervised co-training.

In some embodiments, each of the sub-networks has a channel expansion ratio selected from the group consisting of 3, 4, and 6.

In some embodiments, each of the sub-networks has a depth selected from the group consisting of 2, 3, and 4.

In some embodiments, each of the sub-networks consists of five blocks.

In some embodiments, the five blocks have respective kernel sizes of 3, 5, 3, 3, and 5.

According to an embodiment of the present disclosure, there is provided a system, including: a processing circuit configured to: train a full-sized network and a plurality of sub-networks, the training including performing a plurality of iterations of supervised co-training, the performing of each iteration including co-training the full-sized network and a subset of the sub-networks.

In some embodiments, the co-training of the full-sized network and the subset of the sub-networks includes maximizing the full-sized network only with respect to ground truth labels.

In some embodiments, the co-training of the full-sized network and the subset of the sub-networks includes maximizing the sub-networks only with respect to output of the full-sized network.

In some embodiments, each subset of the sub-networks excludes the smallest sub-network.

In some embodiments, for each iteration, each subset of the sub-networks is selected at random.

In some embodiments, the processing circuit is further configured to perform an epoch of training of the full network, without performing co-training with the sub-networks, before the performing of the plurality of iterations of supervised co-training..

In some embodiments, each of the sub-networks has a channel expansion ratio selected from the group consisting of 3, 4, and 6.

In some embodiments, each of the sub-networks has a depth selected from the group consisting of 2, 3, and 4.

According to an embodiment of the present disclosure, there is provided a system, including: means for processing configured to: train a full-sized network and a plurality of sub-networks, the training including performing a plurality of iterations of supervised co-training, the performing of each iteration including co-training the full-sized network and a subset of the sub-networks.

In some embodiments, the co-training of the full-sized network and the subset of the sub-networks includes maximizing the full-sized network only with respect to ground truth labels.

## ADVANTAGEOUS EFFECT OF THE DISCLOSURE

According to an embodiment of the present invention, the full-size network and the smaller sub-networks may be trained in parallel. Therefore, the number of sampled networks can be reduced and system accuracy can be improved.

## BRIEF DESCRIPTION OF THE DRAWINGS

These and other features and advantages of the present disclosure will be appreciated and understood with reference to the specification, claims, and appended drawings wherein:

FIG. 1 is a training schedule comparison diagram, according to an embodiment of the present disclosure;
FIG. 2 is a schematic illustration of a neural network, according to an embodiment of the present disclosure;
FIG. 3 is a schematic illustration of a full-sized neural network and a plurality of sub-networks progressing through several batches of training, according to an embodiment of the present disclosure;

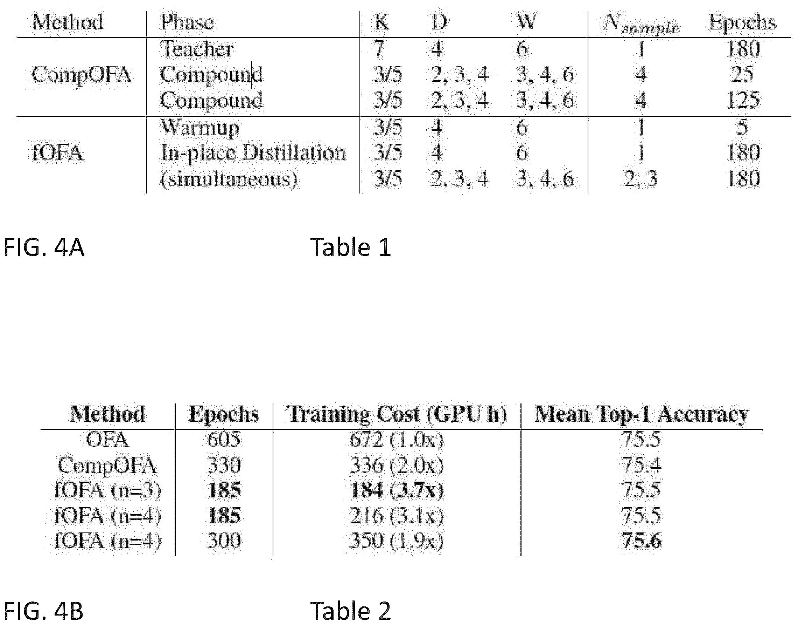

FIG. 4A is a table (Table 1) of training parameters, according to an embodiment of the present disclosure;
FIG. 4B is a table (Table 2) of performance results, according to an embodiment of the present disclosure;

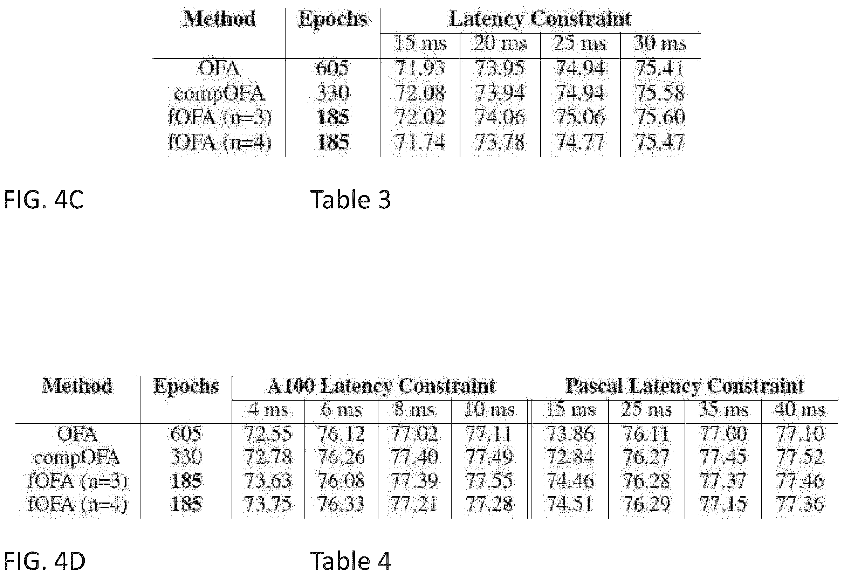

FIG. 4C is a table (Table 3) of performance results, according to an embodiment of the present disclosure;
FIG. 4D is a table (Table 4) of performance results, according to an embodiment of the present disclosure;

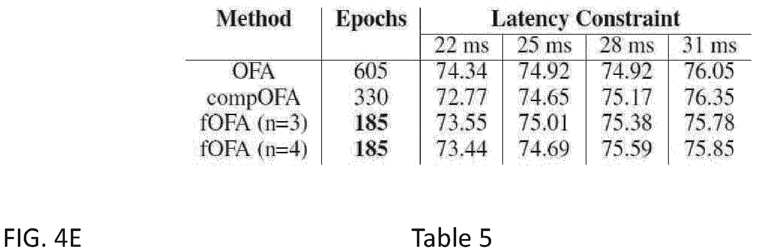

FIG. 4E is a table (Table 5) of performance results, according to an embodiment of the present disclosure; and
FIG. 5 is a graph of accuracy as a function of floating-point operation, according to an embodiment of the present disclosure.

## DETAILED DESCRIPTION

The detailed description set forth below in connection with the appended drawings is intended as a description of exemplary embodiments of a system and method for training a neural network provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

Convolutional neural networks (CNNs) are overwhelmingly successful in many machine learning applications. These applications may have different inference constraints (e.g., latency) and are deployed in different hardware platforms that range from server-grade platforms to edge devices such as smartphones. Optimal network architectures may be designed to meet the requirement for a target deployment scenario. However, naively designing a specialized architecture for each scenario is very expensive as it requires to fully retrain the model each time. This may be an excessively expensive process in terms of the required machine learning expertise, time, energy and $CO_2$ emission.

Some efficient methods are based on training a super-network only once. Then, for a specific deployment scenario, a sub-network is sampled from the super-network that meets the deployment constraints with the best accuracy. The weight of the sampled network is shared with the original super network; hence retraining is not required. A method that may be referred to as "Once-for-all" (OFA) may be employed to tackle this problem. The OFA method trains a once-for-all network that jointly optimizes the accuracy of a large number of sub-networks (more than $10^{19}$) sampled from the once-for-all network. Each sub-network is selected from the once-for-all network where layer depths, channel widths, kernel sizes and input resolution are scaled independently. Such scaling provides a family of CNNs with different computation and representation power to flexibly support deployment under diverse platforms and configurations. With this massive search space, OFA co-trains all the sub-networks by a four-stage progressive training process which may cost around 1200 GPU hours.

Another method, which may be referred to as Compound OFA (CompOFA) builds upon OFA by shrinking the design space of possible sub-networks. This is done by considering only networks whose dimensions are coupled. This reduces the number of possible models by 17 orders of magnitudes, from $10^{19}$ down to 243. This smaller design space may be sufficient, as most sub-networks in the original OFA design space are far from the optimal accuracy-latency frontier. With this smaller space, the training procedure can be simplified as well, as these suboptimal sub-networks are no longer influencing the training process. CompOFA reduces the four stages of the original OFA process to two stages, and this optimization speeds up the training time of CompOFA by a factor of two times over OFA.

However, two times faster than OFA's 1200 GPU-hours is still 600 GPU-hours. Even with this significant improvement, the training cost remains very high, especially when effects on the environment are considered. While some of this cost can be mitigated by improvements in hardware efficiency and the continued development of specialized platforms for training CNNs, algorithmic enhancements also have a large role to play. While CompOFA simplifies the progressive shrinking training procedure used in OFA, it is still dependent on pre-training a super-network to act as a teacher for the sub-network co-training process, which uses knowledge distillation. Due to the optimizations in the co-training process, training the super-network in CompOFA requires more than half (180 out of 330) of the total training epochs.

As such, some embodiments, which may be referred to as "fOFA", include improvements to the once-for-all training process that produce a one-stage training algorithm for fast and efficient neural architecture search. Features of such embodiments include the following. All of the sub-networks are trained from scratch without pre-training a teacher network, using the concept of in-place distillation. During the co-training process, an upper-attentive sampling method, which always samples the full-sized sub-network at each iteration, is employed to help co-train the rest of the sub-networks. Before co-training, an upper-attentive warmup technique, which trains only the full-sized sub-network for a few epochs, is used before co-training to further improve the performance. With these improvements, the number of sampled sub-networks in each iteration of training may be decreased, further improving performance.

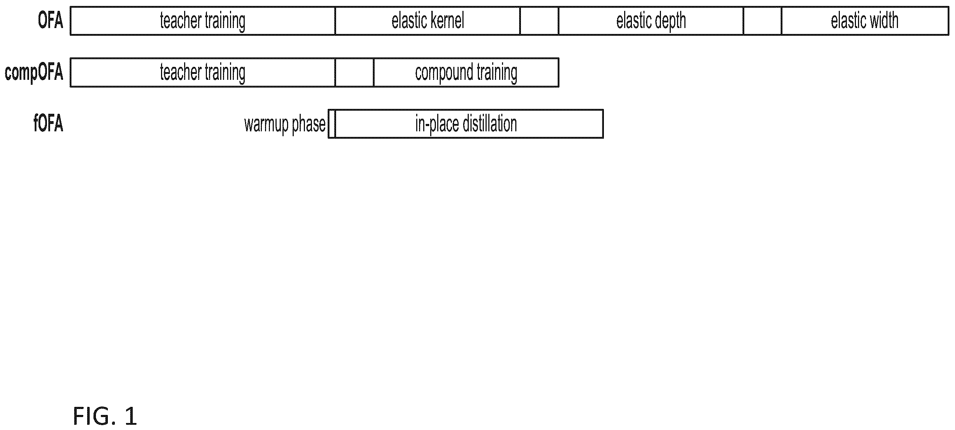

The benefits of such an embodiment are shown in FIG. 1, which shows a comparison of training schedules for OFA, CompOFA, and fOFA. Length on the horizontal axis is proportional to the number of epochs in each phase. For OFA, "elastic kernel," "elastic width," and "elastic depth" are phases of training that are not used in CompOFA and fOFA. Because in some embodiments fOFA has only a single stage, the training time may be increased to improve on the accuracy of other methods while still requiring less training time.

In some embodiments, the search space may be constructed as follows. A neural network $\mathcal{N}$ is a function that takes an input set $X$ and generates a set of outputs $\delta(\mathcal{N}, X)$. In some embodiments, a fixed input set (e.g., ImageNet), is used, and thus the network output may be written as $\delta(\mathcal{N})$. In the supervised learning setting, the performance of the neural network is evaluated against a set of labels (or "ground truth labels") $Y_D$.

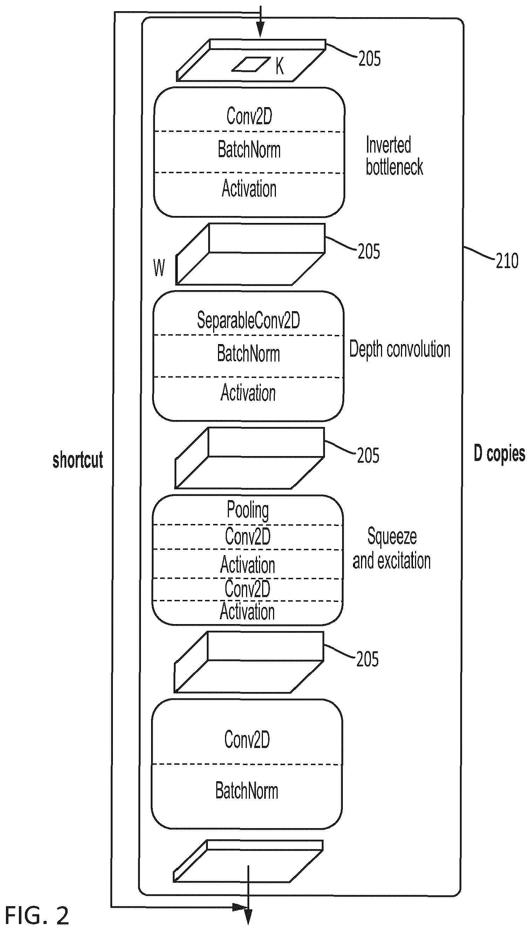

The neural network space may be limited to the set of architectures that consists of a sequence of blocks $B_1$, $B_2$, ..., $B_m$, where, e.g., m = 5. Each block 205 (FIG. 2) is based on the inverted residual in the architecture space of MobileNetV3. A block is parameterized by three dimensions: the depth (number of layers in the block) $D$, the width (channel expansion ratio) W, and the convolution kernel size $K$. This search space is illustrated in FIG. 2, in which the dimension $K$ refers to the size of the convolutional kernel, W to the channel expansion ratio, and $D$ to the number of repetitions of the block. In some embodiments, the neural network is implemented in a processing circuit 210 (discussed in further detail below). While certain embodiments and examples disclosed herein are based on the MobileNetV3 architecture space (shown in FIG. 2), there is nothing in the methods disclosed herein that requires the use of MobileNetV3, and other architectures may be used to similar effect.

To reduce the size of the search space, a coupling heuristic may be used; for example, if there are $n$ choices for the depth dimension and $n$ choices for the width dimension, the $i$th largest width $w_i$ is sampled whenever the $i$th largest depth $d_i$ is sampled. Some embodiments use a fixed kernel size within each block. The network where the values $K, D,$ and W are each their largest possible value may be referred to as the "full-sized network" or "super-net", and the network created by any other choice of these values may be referred to as a "sub-network". The full-sized network may also be referred to as the "largest sub-network".

Three possible values may be chosen for $D \in \{2,3,4\}$ and three possible values for $W \in \{3,4,6\}$ and the kernel size may be fixed to $K = 3$ in the first, third, and fourth blocks, and $K = 5$ in the second and fifth blocks. Thus, with five blocks, there may be $3^5 = 243$ models in the search space.

In neural architecture search, the input resolution can vary as well, up to a maximum size of 224 x 224 for ImageNet. As such, an elastic resolution, where input images are resized to be square with dimension in the set {128, 160, 192, 224}, may be used.

Knowledge distillation may be used to guide the super-net co-training procedure. In general, co-training all the sub-networks with a teacher model can be considered as a multi-objective optimization problem, which can be formulated as:

$$\min_{\mathcal{N}} \sum_{a_i} \mathcal{L}\left(\mathcal{N}_{a_i}, \mathcal{N}_T, Y_D\right) \quad (1)$$

where $\mathcal{N}$ denotes the weights of the full-sized network, $\mathcal{N}_T$ is the additional pre-trained teacher model, and $\mathcal{N}_{a_i}$ is a random sub-network of $\mathcal{N}$ where $a_i$ specified the sub-network architecture. The loss function L is

$$\mathcal{L}\left(\mathcal{N}_{a_i}, \mathcal{N}_T, Y_D\right) = \mathcal{L}\left(\delta\left(\mathcal{N}_{a_i}\right), Y_D\right) + \beta * \mathcal{L}\left(\delta\left(\mathcal{N}_{a_i}\right) + \delta(\mathcal{N}_T)\right) \quad (2)$$

where $\beta$ denotes the distillation weight. This optimization function aims to co-train all the sub-networks during the training using both the target label and output of the teacher network using knowledge distillation. However, because there are so many sub-networks, it may not be practical to compute this loss function in its entirety. As such, a subset of the sub-networks, e.g., $n$ sub-networks, may be randomly sampled in each training iteration. The loss function is thus reformulated

as $$\min_{\mathcal{N}} \sum_i^n \mathcal{L}\left(\mathcal{N}_{rand(a_i)}, W_T, Y_D\right) \quad (3)$$

where $n$ = 4 may be used as the number of sub-networks to sample.

Requiring the training of a teacher model $\mathcal{N}_T$ may add significant overhead to the total training time, e.g., if teacher training is completed before the training of sub-networks begins. As such, in some embodiments, training of the teacher model is eliminated and instead the sub-networks are co-trained from scratch. If $\mathcal{N}_T$ is removed from the loss function above, a random sampling loss function may be reformulated

$$\min_{\mathcal{N}} \sum_i^n \mathcal{L}\left(\mathcal{N}_{rand(a_i)}, Y_D\right) \quad (4)$$

where $\mathcal{L}\left(\mathcal{N}_{a_i}, Y_D\right) = \mathcal{L}\left(\delta\left(\mathcal{N}_{a_i}\right), Y_D\right)$ for any network $a_i$. However, this sampling method may result in significant accuracy drops if co-training sub-networks from scratch. To improve accuracy, a "sandwich model", wherein the largest and smallest possible sub-networks are always sampled, may be used. Its loss function is

$$\min_{\mathcal{N}} \left(\mathcal{L}(\mathcal{N}_{max}, Y_D) + \sum_{i=1}^{n-2} \mathcal{L}\left(\mathcal{N}_{rand(a_i)}, \mathcal{N}_{max}\right) + \mathcal{L}(\mathcal{N}_{min}, \mathcal{N}_{max})\right) \quad (5)$$

where $\mathcal{N}_{max}$ denotes the full-sized network and $\mathcal{N}_{min}$ denotes the smallest sub-network. The full-sized network is thus trained in parallel with the smaller models.

The sandwich model may apply to a high training cost scenario in which $10^{12}$ models are being evaluated. In a scenario with only 243 models, including the smallest model $\mathcal{N}_{min}$ may adversely affect the overall accuracy. As such, a sampling method, which may be referred to as "upper-attentive sampling", which always samples the full-sized sub-network in each iteration, and $n$ - 1 random sub-networks, may be used. The loss function of upper-attentive sampling is:

$$\min_{\mathcal{N}} \left(\mathcal{L}(\mathcal{N}_{max}, Y_D) + \sum_{i=1}^{n-1} \mathcal{L}\left(\mathcal{N}_{rand(a_i)}, \mathcal{N}_{max}\right)\right) \quad (6)$$

where $\mathcal{N}_{max}$ represents the largest sub-network. During training, the largest sub-network is maximized only with respect to the ground truth labels, while the additional sub-networks are trained only with respect to the output of the largest sub-network.

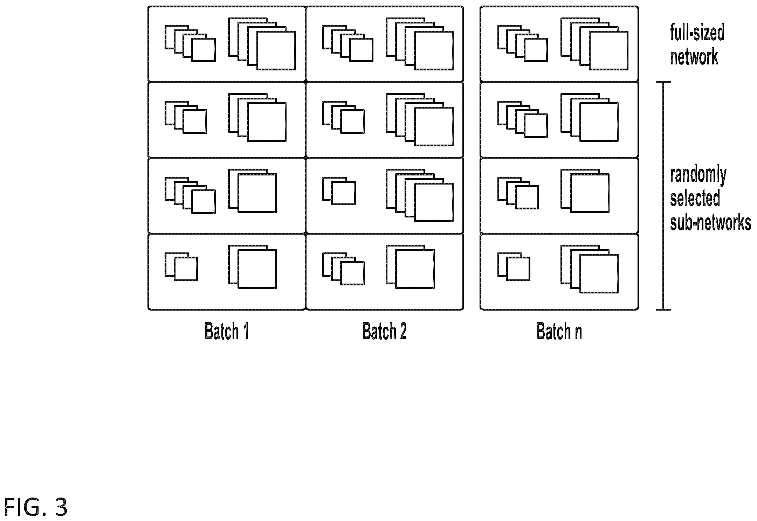

A schematic of upper attentive sampling is shown in FIG. 3. In upper attentive sampling, the largest possible model (with, in FIG. 3, $D$ = 4 and $W$ = 6 for all blocks, shown in the top row) is selected during each batch of the training process. The other models selected at each batch are randomly chosen from all possible sub-networks. The smallest possible model (in the lower left corner) need not be selected at each batch.

With upper attentive sampling, the smallest model may (i) be replaced with a randomly selected sub-network, or (ii) removed entirely, effectively reducing the number of sampled networks by one when compared to CompOFA or BigNAS. Intuitively, removing the smallest network may result in faster training than replacing it, but may have a negative impact on accuracy. Both options are discussed in further detail below.

In some embodiments, a warmup phase may be used. Because the full-sized sub-network $\mathcal{N}_{max}$ is a soft target for the other sub-networks, training benefits may be obtained from a warmup phase so that the initial target for the smaller sub-networks is not random at the start. First training the largest sub-network for a few epochs may provide good results, for example, and may be faster than training a teacher from scratch for 180 epochs.

Sub-network selection may be performed using an evolutionary search to retrieve specific sub-networks that are optimized for a given hardware target. This search finds trained networks that maximize accuracy subject to the target latency or FLOP constraint. For hardware targets such as the Samsung™ Note10™, latency may be estimated using a look-up table estimator.

Testing has been performed to assess the performance of methods disclosed herein. Experiments were performed on an NVIDIA™ DGX-A100 server with 8 Graphics Processing Units (GPUs). Experiments were run in version 21.03 of the NVIDIA GPU Cloud (NGC) pytorch container1, which includes Python 3.8, pytorch 1.9.0, and NVIDIA CUDA 11.2. Horovod version 0.19.3 was used for multi-GPU training.

The training schedule for fOFA is listed in Table 1 (as mentioned above, comparisons with CompOFA and fOFA are shown in FIG. 1). The lengthy teacher training phase was replaced with in-place distillation, preceded by a short warmup phase. The size of the teacher kernels used for the fOFA experiments was $K = 3$ or $K = 5$.

CompOFA requires 330 total epochs, of which over half (180) are dedicated to training the full-size teacher model. For fOFA, 185 total epochs were used. Of these, only 5 epochs were used for warming up the full-size model in advance of in-place distillation, wherein the super-net and the randomly selected networks are trained simultaneously.

The model search was performed over the MobileNetV3 space with expansion ratio 1.02. 8 GPUs, a batch size of 256 per GPU, and a learning rate of 0.325 were used. For a fair comparison, all other hyper-parameters were set to the same values as OFA and CompOFA, including a cosine learning rate schedule, momentum of 0.9, batch-norm momentum of 0.1, weight decay of 3e-5, label smoothing of 0.1, and dropout rate of 0.1. Also, as fOFA is trained from scratch instead of fine-tuning on the pre-trained teacher model, a gradient clipping threshold of 1.0 was adopted to make the training stable.

Training results were obtained, as follows. Table 2 shows the average accuracy over the generated models. For fOFA, $n = 3$ means that the smallest model from the sandwich rule has been removed, and the training is performed with the largest model and two randomly selected sub-networks. $n = 4$ means that the smallest model has been replaced, and training is performed with the largest model and three randomly selected sub-networks.

For CompOFA and fOFA, the mean top-1 accuracy is computed over all 243 models generated by the training process. Since OFA has an extremely large number of sub-networks, this average was calculated by selecting the same 243 models that are used in CompOFA and fOFA. While CompOFA is 2.0 faster than OFA, with 185 epochs, fOFA is a further 1.55 faster than CompOFA if four sub-networks are sampled during training, and a further 1.83 faster if only three sub-networks are sampled. In both cases, the accuracy of fOFA is equal to OFA and 0.1% greater than CompOFA. If four sub-networks are sampled and the training time is extended to approximately match the number of GPU-hours required for CompOFA, an average accuracy 0.1% greater than OFA is generated.

Hardware latency was assessed, as follows. Table 3 shows the performance of the once-for-all methods for the hardware deployment scenario of a Samsung Note10. Latency thresholds of 15, 20, 25, and 30 milliseconds were used. At latencies larger than 20 ms, fOFA with $n = 3$ is more accurate than other methods while also having the smallest training cost. At 15 ms, fOFA is slightly less accurate than compOFA, but is still 1.83 times faster in training time.

The left-hand portion of Table 4 shows the performance of the methods on an NVIDIA A100 GPU. In this setting, the latency is measured directly using the CompOFA code3. fOFA with $n = 4$ has the highest accuracy at the strictest latency constraints (4 ms and 6 ms), while fOFA with $n = 3$ performs best at 10 ms latency. fOFA ($n = 3$) and compOFA have nearly identical accuracy at 8 ms. The right-hand portion of Table 4, shows the performance of the methods for an earlier-generation GPU (Nvidia Pascal) with more relaxed latency constrains. The results show similar trends to the A100 GPU where fOFA is superior at the strictest constraints and has similar accuracy to CompOFA at high constraints.

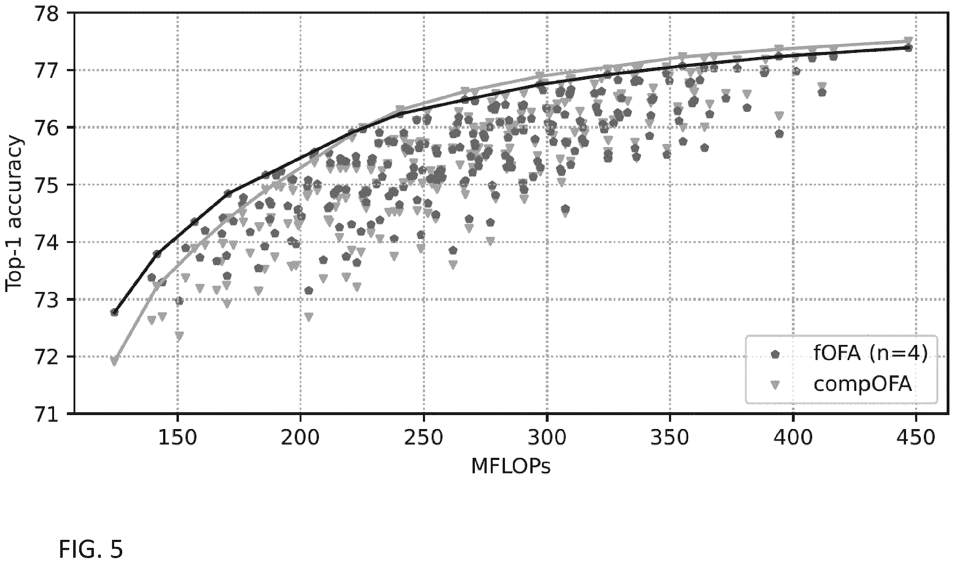

Table 5 shows the performance of the methods on a CPU. Again, latency was measured directly using the CompOFA code. In this setting, fOFA achieves the highest accuracy at medium constraints (25 ms and 28 ms), while compOFA achieves the best accuracy at 31ms, and OFA at 22 ms. FIG. 5 shows the trade-off between model accuracy and number of floating-point operations for compOFA and fOFA with $n = 4$.

On average, fOFA is 0.1% more accurate than CompOFA, as listed in Table 2, and achieves greater accuracy on models with lower FLOP counts, agreeing with results in Tables 3-5. Despite replacing the sandwich rule with upper-attentive sampling, the smallest model in the search space has 0.9% greater accuracy in fOFA.

Embodiments using fOFA with the sandwich rule were also assessed on the same hyperparameter space. With the sandwich rule, the average accuracy over the search space was 0.3% lower than with upper-attentive sampling. Furthermore, the decrease in accuracy was greater on models with higher FLOP counts, and less on models with lower FLOP counts. An explanation for these results may be that the upper bound of the CompOFA search space is significantly lower than that of the MobileNetv2 search space. In BigNAS, the largest model in the search space required 1.8 GFLOPs while the largest output model, BigNASModel-XL, required only 1.04 GFLOPs. In contrast, the largest model in the CompOFA search space uses 447 MFLOPs and the models tested for GPU deployment in Table 4 approach this upper limit.

In the experiments, the convolution kernel sizes for each block were set to those used in MobileNetV3 for all models in the search space, including the teacher. Experiments were also conducted in which the size of the teacher model was increased, using K = 7 for each block in the teacher; it was found that this results in the average accuracy decreasing to 74.8%. From this result, it may be inferred that an overly large teacher model, while providing a higher upper bound on accuracy, may not be as effective for training smaller submodels, and that when the teacher model is closer in size to the submodels, upper-attentive sampling is sufficient to achieve good accuracy throughout the search space.

When upper-attentive sampling is used in combination with in-place distillation, the warm-up phase may be employed so that the initial target for sub-model training is better than random. After five epochs of warm-up, the teacher model had an accuracy of 47.42% in the experiments, providing a reasonable starting point for training. In OFA and CompOFA, this warmup phase may be omitted because the teacher model is already fully trained.

The experiments have shown that fOFA can achieve the same accuracy as OFA with a speed-up of 3.1 times to 3.7 times, and similar accuracy to CompOFA with a speed-up of 1.5 times to 1.8 times.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

Although exemplary embodiments of a system and method for training a neural network have been specifically described and illustrated herein, many modifications and variations will be apparent to those skilled in the art. Accordingly, it is to be understood that a system and method for training a neural network constructed according to principles of this disclosure may be embodied other than as specifically described herein. The invention is also defined in the following claims.

**Claims**

1.  A method, comprising:

    training a full-sized network and a plurality of sub-networks,
    the training comprising performing a plurality of iterations of supervised co-training,
    the performing of each iteration comprising co-training the full-sized network and a subset of the plurality of sub-networks.

2.  The method of claim 1, wherein the co-training of the full-sized network and the subset of the plurality of sub-networks comprises maximizing the full-sized network only with respect to ground truth labels.

3.  The method of claim 1 or 2, wherein the co-training of the full-sized network and the subset of the plurality of sub-networks comprises maximizing the plurality of sub-networks only with respect to output of the full-sized network.

4.  The method of any one of claims 1 to 3, wherein each subset of the plurality of sub-networks excludes the smallest sub-network.

5.  The method of any one of claims 1 to 4, wherein, for each iteration, each subset of the plurality of sub-networks is selected at random.

6.  The method of any one of claims 1 to 5, further comprising performing an epoch of training of the full-sized network, without performing co-training with the plurality of sub-networks, before the performing of the plurality of iterations of supervised co-training.

7.  The method of any one of claims 1 to 6, wherein each of the plurality of sub-networks has a channel expansion ratio selected from the group consisting of 3, 4, and 6.

8.  The method of any one of claims 1 to 7, wherein each of the plurality of sub-networks has a depth selected from the group consisting of 2, 3, and 4.

9.  The method of any one of claims 1 to 8, wherein each of the plurality of sub-networks consists of five blocks.

10. The method of claim 9, wherein the five blocks have respective kernel sizes of 3, 5, 3, 3, and 5.

11. A system, comprising:
    a processing circuit configured to perform the method according to any one of claims 1 to 10.

EP 4 163 835 A1

| OFA | teacher training | elastic kernel | | elastic depth | | elastic width |
|---|---|---|---|---|---|---|

| compOFA | teacher training | | compound training |
|---|---|---|---|

| fOFA | warmup phase | | in-place distillation |
|---|---|---|---|

FIG. 1

FIG. 2

FIG. 3

| Method | Phase | K | D | W | $N_{sample}$ | Epochs |
|--------|-------|---|---|---|--------------|--------|
| | Teacher | 7 | 4 | 6 | 1 | 180 |
| CompOFA | Compound | 3/5 | 2, 3, 4 | 3, 4, 6 | 4 | 25 |
| | Compound | 3/5 | 2, 3, 4 | 3, 4, 6 | 4 | 125 |
| | Warmup | 3/5 | 4 | 6 | 1 | 5 |
| fOFA | In-place Distillation | 3/5 | 4 | 6 | 1 | 180 |
| | (simultaneous) | 3/5 | 2, 3, 4 | 3, 4, 6 | 2, 3 | 180 |

FIG. 4A                    Table 1

| Method | Epochs | Training Cost (GPU h) | Mean Top-1 Accuracy |
|--------|--------|----------------------|---------------------|
| OFA | 605 | 672 (1.0x) | 75.5 |
| CompOFA | 330 | 336 (2.0x) | 75.4 |
| fOFA (n=3) | **185** | **184 (3.7x)** | 75.5 |
| fOFA (n=4) | **185** | 216 (3.1x) | 75.5 |
| fOFA (n=4) | 300 | 350 (1.9x) | **75.6** |

FIG. 4B                    Table 2

| Method | Epochs | Latency Constraint | | | |
|---|---|---|---|---|---|
| | | 15 ms | 20 ms | 25 ms | 30 ms |
| OFA | 605 | 71.93 | 73.95 | 74.94 | 75.41 |
| compOFA | 330 | 72.08 | 73.94 | 74.94 | 75.58 |
| fOFA (n=3) | **185** | 72.02 | 74.06 | 75.06 | 75.60 |
| fOFA (n=4) | **185** | 71.74 | 73.78 | 74.77 | 75.47 |

Table 3

FIG. 4C

| Method | Epochs | A100 Latency Constraint | | | | Pascal Latency Constraint | | | |
|---|---|---|---|---|---|---|---|---|---|
| | | 4 ms | 6 ms | 8 ms | 10 ms | 15 ms | 25 ms | 35 ms | 40 ms |
| OFA | 605 | 72.55 | 76.12 | 77.02 | 77.11 | 73.86 | 76.11 | 77.00 | 77.10 |
| compOFA | 330 | 72.78 | 76.26 | 77.40 | 77.49 | 72.84 | 76.27 | 77.45 | 77.52 |
| fOFA (n=3) | **185** | 73.63 | 76.08 | 77.39 | 77.55 | 74.46 | 76.28 | 77.37 | 77.46 |
| fOFA (n=4) | **185** | 73.75 | 76.33 | 77.21 | 77.28 | 74.51 | 76.29 | 77.15 | 77.36 |

Table 4

FIG. 4D

| Method | Epochs | Latency Constraint | | | |
|---|---|---|---|---|---|
| | | 22 ms | 25 ms | 28 ms | 31 ms |
| OFA | 605 | 74.34 | 74.92 | 74.92 | 76.05 |
| compOFA | 330 | 72.77 | 74.65 | 75.17 | 76.35 |
| fOFA (n=3) | **185** | 73.55 | 75.01 | 75.38 | 75.78 |
| fOFA (n=4) | **185** | 73.44 | 74.69 | 75.59 | 75.85 |

FIG. 4E                          Table 5

FIG. 5

# EP 4 163 835 A1

**EUROPEAN SEARCH REPORT**

Application Number

EP 22 19 7721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAOJIANNAN YANG ET AL: "MutualNet: Adaptive ConvNet via Mutual Learning from Different Model Configurations", ARXIV.ORG, CORNELL UNIVERSITY LIBRARY, 201 OLIN LIBRARY CORNELL UNIVERSITY ITHACA, NY 14853, 14 May 2021 (2021-05-14), pages 811-827, XP081963883, | 1-3,5,11 | INV. G06N3/0464 G06N3/045 G06N3/09 G06N3/096 G06N3/0985 G06N3/082 |
| A | * page 811 – page 818; figures 2, 5 * | 4,6-10 | |
| X | MANAS SAHNI ET AL: "CompOFA: Compound Once-For-All Networks for Faster Multi-Platform Deployment", ARXIV.ORG, CORNELL UNIVERSITY LIBRARY, 201 OLIN LIBRARY CORNELL UNIVERSITY ITHACA, NY 14853, 26 April 2021 (2021-04-26), pages 1-13, XP081944580, * page 1 – page 8; figure 1 * | 1-11 | |
| A | ABDOLMAGED ALKHULAIFI ET AL: "Knowledge Distillation in Deep Learning and its Applications", ARXIV.ORG, CORNELL UNIVERSITY LIBRARY, 201 OLIN LIBRARY CORNELL UNIVERSITY ITHACA, NY 14853, 17 July 2020 (2020-07-17), pages 1-27, XP081922236, DOI: 10.7717/PEERJ-CS.474 * page 1 – page 12; figures 1-2 * | 1-11 | **TECHNICAL FIELDS SEARCHED (IPC)** G06N |

-/--

The present search report has been drawn up for all claims

| Place of search | Date of completion of the search | Examiner |
|---|---|---|
| The Hague | 14 February 2023 | Klasen, TJ |

EPO FORM 1503 03.82 (P04C01)

page 1 of 2

Europäisches
Patentamt

European
Patent Office

Office européen
des brevets

**EUROPEAN SEARCH REPORT**

Application Number

EP 22 19 7721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAN CAI ET AL: "Once for All: Train One Network and Specialize it for Efficient Deployment", ARXIV.ORG, CORNELL UNIVERSITY LIBRARY, 201 OLIN LIBRARY CORNELL UNIVERSITY ITHACA, NY 14853, 26 August 2019 (2019-08-26), pages 1-13, XP081571912, * page 1 - page 6; figure 4 * ----- | 1-11 | |

TECHNICAL FIELDS
SEARCHED      (IPC)

The present search report has been drawn up for all claims

| Place of search | Date of completion of the search | Examiner |
|---|---|---|
| The Hague | 14 February 2023 | Klasen, TJ |

EPO FORM 1503 03.82 (P04C01)